# EUROPEAN PATENT APPLICATION

(11) **EP 1 335 322 A2**
(43) Date of publication of application: **13.08.2003**
(21) Application number: 03250853.3
(22) Date of filing: 12.02.2003
(51) Int. Cl.: G06T 7/00

(54) **Method of determining body motion from captured image data**

(30) Priority: 12.02.2002 JP 2002033991
(71) Applicant: The University of Tokyo, Bunkyo-Ku, Tokyo (JP)
(72) Inventor: Nakamura, Yoshihiko, Tokyo (JP); Yamane, Katsu, Saitama Pref. (JP); Kurihara, Kazutaka, Tokyo (JP); Suzuki, Ichiro, Tokyo (JP)
(74) Representative: Fenlon, Christine Lesley

(57) **Abstract**

In a method of processing passive optical motion capture data having: an image capture step for capturing synchronized multiple camera images of a subject with passive optical markers; a three-dimensional reconstruction step for obtaining a set of three-dimensional coordinates of the markers from the picked-up data; a labeling step for deciding temporal correspondence between the markers in the subsequent captures and, thereby, locating the body part of the subject to which the markers are attached; and a joint angle calculation step for deciding an angle of each joint of a kinematic model to which the motion of subject is projected, on the basis of a set of labeled markers and computing a posture of the subject, the labeling step and the joint angle step are coupled as a loop and are performed simultaneously.

## Description

The present invention relates to a method of processing passive optical motion capture data. In particular, the methods of the present invention preferably comprise: a capture step for capturing
synchronized multiple camera images of a subject with passive optical markers; a three-dimensional reconstruction step for obtaining a set of three-dimensional coordinates of the markers from the captured data; a labeling step for deciding temporal correspondence between the markers in the subsequent capturers and, thereby, locating the body part of the subject to which the makers are attached; and a joint angle calculation step for deciding an angle of each joint of a kinematic model to which the motion of subject is projected, on the basis of a set of labeled markers and computing a posture of the subject.

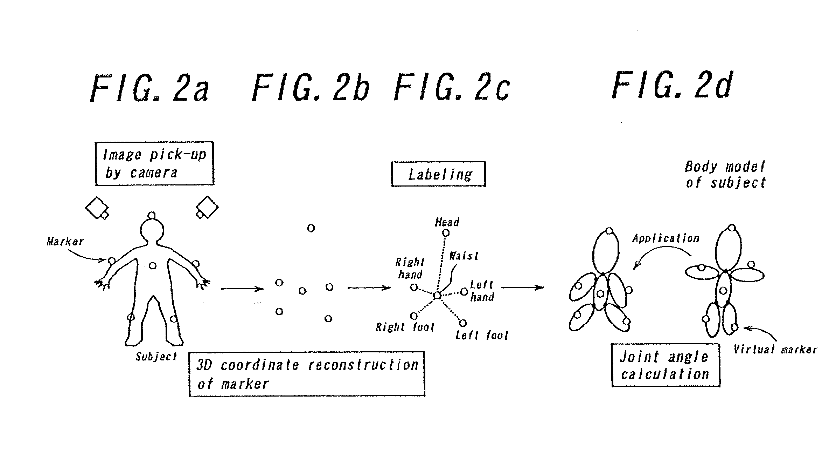

Figs. 2a-2d are schematic views respectively showing a processing step of a previously considered method of processing passive optical motion capture data. At first, a subject wears markers and the motion of the subject is picked-up by cameras arranged around the subject (Fig. 2a). In a two-dimensional image picked-up by each camera, a number of markers are seen and determined their positions in the image coordinates. The three-dimensional coordinates of respective markers are computed from the synchronously captured two-dimensional images of all the cameras (Fig. 2b). Even after the three-dimensional coordinates of makers are computed from images captured at a certain time, body parts, to which the markers are attached, are unknown.
That is, name information is not labeled to the respective markers. A labeling is performed to find name information to respective markers by one kind or other means (Fig. 2c). Finding names is to determine temporal correspondence, namely, which marker at a certain time corresponds to which one at the previous times. The labeled markers are made to correspond to markers set virtually on the kinematic model (describing a human and so on in a computer by means of a rigid link mechanism) such as target CG characters previously prepared. Then, all joint angles are calculated (Fig. 2d).

In the known passive optical motion capture, the labeling step is normally performed after finishing the image pick-up step. The reason is as follows. When the markers are hidden behind the subject's hand and foot or when the markers are positioned at a blind spot of the camera, the three-dimensional coordinates of the markers are not obtained due to the occluded markers mentioned above. Under such a condition, the markers vanish as data, and the vanished markers reappear. In this case, it is difficult to find the name to the markers at the same time as the image pick-up step. In the case of performing the labeling step automatically, a method, wherein the markers being proximal to the markers obtained at the previous labeling step are determined as the same markers, but are not addressed to the vanishing and reappearing of the markers, and further outputs physically are impossible results for a body configuration of the subject.

In order to alleviate these problems mentioned above, Yang Song et al. develops a technique for performing the labeling steps automatically by utilizing a frequency function (Yang Song, Luis Goncalves, Enrico Di Berrnardo and Pietro Perona, "Monocular Perception of Biological Motion-Detection and Labeling", In Proc. IEEE CVPR, pp805-812, 1999). However, in this technique, it is necessary to learn "typical" motions previously and it is difficult to increase the number of markers used for the image pick-up operation. Moreover, in this technique, after finishing the image pick-up step, the labeling step is performed in such a manner that the labeling at respective times is performed with reference to the labeling results at all the times in a no-contradiction manner. Therefore, it is difficult to perform this technique in real time.

Hereinafter, the problems in the known method of processing passive optical motion capture data are summarized.
(1) Since the labeling is performed without reference to the body configuration of the subject, the physically impossible results are output.
(2) In the case of vanishing the markers, the positions of the vanished markers are not determined. In order to estimate the positions of the vanished markers, it is necessary to use another means.
(3) In the technique, wherein the vanished markers are compensated because of the labeled markers obtained by many labeled markers at previous and after labeling steps, it is not possible to perform the real time labeling wherein the labeling step is performed within a time interval of image pick-up, or similar.
(4) In the joint angle calculation step after labeling, according to an algorithm used, since it is not possible to calculate the joint angle under the condition such that all the markers are always labeled irrespective of whether the markers are vanished or not, a burden on the labeling step is increased.

Preferred embodiments of the present invention seek to provide a method of processing passive optical motion capture data, which does not depend on a specific labeling algorithm and a joint angle calculation algorithm, which improves robust property against markers missing in the passive optical motion capture, and which can achieve real time processing in the overall system.

According to the invention, a method of processing passive optical motion capture data comprises: an image capture step for capturing synchronized multiple camera images of a subject with passive optical markers; a three-dimensional reconstruction step for obtaining a set of three-dimensional coordinates of the markers from the picked-up data; a labeling step for deciding temporal correspondence between the markers in the subsequent captures and, thereby, locating the body part of the subject to which the markers are attached; and a joint angle calculation step for deciding an angle of each joint of a kinematic model to which the motion of subject is projected, on the basis of a set of labeled markers and computing a posture of the subject, wherein the labeling step and the joint angle step are coupled as a loop and are performed simultaneously.

In preferred embodiments of the present invention, the labelling step and the joint angle calculation step, which are normally performed independently, are coupled as a loop and are performed simultaneously. Therefore, the following functions and effects can advantageously be obtained.
(a) After the joint angle calculation, the coordinates of the vanished markers can be estimated and it is always possible to obtain all the motions of the markers.
(b) In the case of labeling, since the posture of the subject at present can be estimated, it is possible to perform effectively the operation for finding out the markers attached at various portions on the body.
(c) Since, at respective times, it becomes easy to obtain all the marker data and all the joint angle data, it is possible to apply the present invention to the real time motion capture.

As a preferred embodiment, the labeling step at the present time is performed with reference to virtual markers on the subject at the previous time obtained by performing the previous joint angle calculation step for the previous captured data. This embodiment is preferred since it performs the present invention more effectively. Moreover, it is possible to realize a real time motion capture system when the method of processing the passive optical motion capture data mentioned above is utilized.

For a better understanding of the present invention, and to show how the same may be carried into effect, reference will now be made, by way of example to the accompanying drawings, in which:
Figs. 1a - 1f are schematic views respectively explaining one processing step of a method of processing passive optical motion capture data according to an embodiment of the invention; and
Figs. 2a - 2d are schematic views respectively explaining one processing step of a known method of processing passive optical motion capture data.

In a method of processing passive optical motion capture data according to an embodiment of the invention, a labelling and a joint angle calculation are not performed independently but performed simultaneously. That is, the labeling and the joint angle calculation are coupled as a loop, and the positions of markers are estimated from a posture of the overall body obtained by the joint angle calculation at respective times and are supplied to the labeling at the next time as a feedback of reference information. Hereinafter, the present invention will be explained in detail.

The joint calculation is performed for a kinematic model of a subject, a CG character or a body model of a humanoid, whose motion is to be determined. Virtual markers are arranged on the kinematic model, and the posture of the overall body is decided by moving respective joints in such a manner that the virtual markers are overlapped on actually calculated and labeled markers as much as possible. It depends on the algorithm used whether the joint angle calculation requires all the marker coordinates or not irrespective of missing makers, but the entire virtual marker positions on the body model can be determined without exception after finishing the calculation. By utilizing this property, a motion capture system as shown in Figs. 1a - 1f can be constructed.

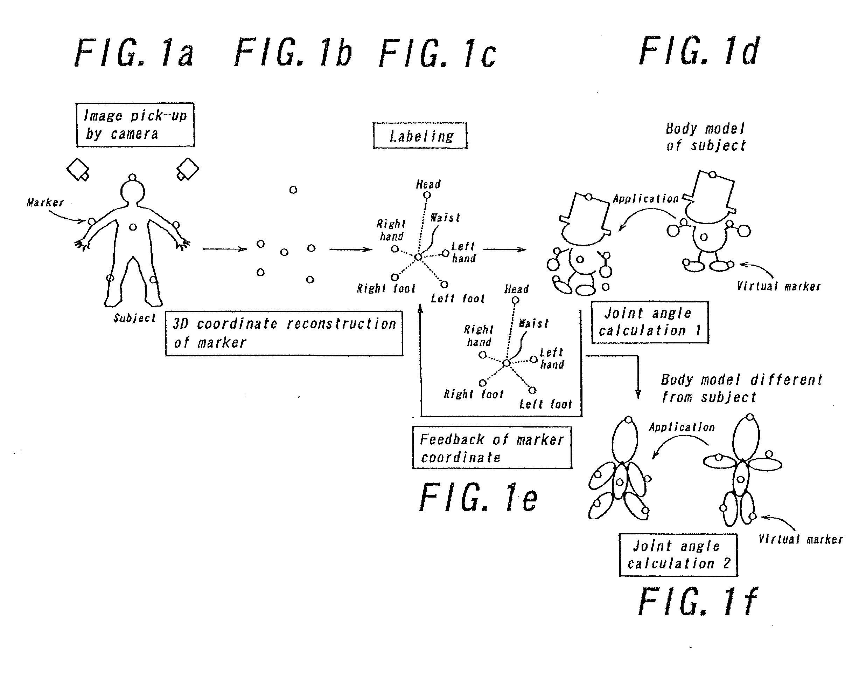

Firstly, in the embodiments shown in Figs. 1a - 1f, an image capture step shown in Fig. 1a, a three-dimensional reconstruction step shown in Fig. 1b and a primary labeling step of a labeling step shown in Fig. 1c are the same as those of the known one. As the model utilized at the joint angle calculation, a kinematic model based on the body of the subject or else is utilized (Fig. 1d). All the virtual marker coordinates determined after the joint angle calculation are fed back to the labeling at the next time as reference information (Fig. 1e). Since the labeling is always performed by utilizing thus determined reference information and is thus performed with reference to a configuration of the body of the subject, it is possible to improve a performance as compared with that of the known one.

As a labeling method, various labeling methods are now utilized. Among them, in a labeling method wherein a marker positioned proximate to a reference marker position is labeled, since in the known one a marker position labeled at the previous time is determined as the reference marker position, it is not possible to address the missing marker. However, according to the invention, since a marker position fed back from the joint angle calculation is determined as the reference marker position, it is always possible to use the reference marker positions even in the missing marker case, and thus it is possible to continue the labeling. If all the marker coordinates are to be output irrespective of whether the missing markers are existent or not, it is possible to output the fed back reference marker positions as they are as an emergency case.

In a case that the motions of a kinematic model different from the subject are obtained as a final output, a set of the virtual markers of the kinematic model obtained by performing the joint angle calculation with respect to the subject is determined once. Then, the new joint angle calculation is performed for the kinematic model different from the subject (Fig. 1f).

According to preferred embodiments of the invention, at all times except for the initial time, it is possible to perform the labelling and the joint angle calculation only by utilizing the reference information at the previous time, and thus it is possible to realize a real time processing of the optical motion capture.

The present invention can be preferably applied to a real time operation input device of a robot such as a humanoid and a bionic motion measuring apparatus and so on, other than the optical motion capture system and the optical real time motion capture system mentioned above.

As clearly understood from the above explanations, according to the method of processing the passive optical motion capture data of the invention, even if the labeling algorithm and the joint angle calculation algorithm are same as those of the known one, the following effects can be obtained as compared to the known method wherein the labeling and the joint angle calculation are performed independently.
(a) A space to be searched by the labeling can be limited by utilizing the reference information fed back from the joint angle calculation. This can reduce the labeling miss and decrease the search time.
(b) Since use is made of the reference information including the configuration of the body, the physically impossible labeling results can be avoided.
(c) In the case of utilizing the algorithm wherein the joint angle calculation requires inputs of all the marker positions, it is possible to address the case by providing as output the reference information at the previous time as it is if the marker missing occurs during the labeling.
(d) If only the joint angle calculation can be performed, all the marker coordinates at all times can be determined irrespective of whether the marker is vanished or not.

## Claims

1. A method of processing passive optical motion capture data comprising: an image capture step for capturing synchronized multiple camera images of a subject with passive optical markers; a three-dimensional reconstruction step for obtaining a set of three-dimensional coordinates of the markers from the captured data; a labeling step for deciding temporal correspondence between the markers in the subsequent captures and, thereby, locating the body part of the subject to which the markers are attached; and a joint angle calculation step for deciding the angle of each joint of a kinematic model to which the motion of subject is projected, on the basis of a set of labeled markers and computing a posture of the subject, wherein the labeling step and the joint angle step are coupled as a loop and are performed simultaneously.

2. The method of processing passive optical motion capture data according to claim 1, wherein the labeling step at the present time is performed with reference to virtual markers on the subject at the previous time obtained by performing the previous joint angle calculation step for the previous captured data.

3. A real time motion capture system, wherein the method of processing passive optical motion capture data according to claim 1 or 2 is utilized.
